# FASCICULE DE BREVET EUROPEEN

(11) **EP 3 145 790 B1**
(45) Date de publication et mention de la délivrance du brevet: **04.07.2018**
(21) Numéro de dépôt: 15804380.2
(22) Date de dépôt: 01.12.2015
(51) Int. Cl.: B62D 1/184, B62D 1/185

(54) **MÉCANISME DE COLONNE DE DIRECTION AJUSTABLE EN PROFONDEUR À BUTÉE ESCAMOTABLE**
IN DIE TIEFE EINSTELLBARER LENKSÄULEMECHANISMUS MIT VERSENKBAREM ANSCHLAG
STEERING COLUMN MECHANISM ADJUSTABLE IN DEPTH WITH A RETRACTABLE STOPPER

(30) Priorité: 09.12.2014 FR 1462088
(43) Date de publication de la demande: 29.03.2017
(73) Titulaire: Robert Bosch Automotive Steering Vendôme, 41100 Vendome (FR)
(72) Inventeur: CHARVET, William, 37170 Chambray-lès-Tours (FR); BERNIER, Jacques, 41800 Montoire-sur-le-Loir (FR); SAUQUET, Mickaël, 41100 Villerable (FR)
(74) Mandataire: Alatis
(86) Numéro de dépôt international: PCT/EP2015/078121
(87) Numéro de publication internationale: WO 2016/091642

(56) Documents cités:
- EP-A1- 2 497 696
- DE-A1-102011 056 351

## Description

### DOMAINE TECHNIQUE DE L'INVENTION

L'invention se rapporte à une colonne de direction ajustable en profondeur, et le cas échéant en hauteur.

### ÉTAT DE LA TECHNIQUE ANTÉRIEURE

Un mécanisme de colonne de direction de véhicule comporte usuellement un sous-ensemble mobile comportant un corps inférieur et un tube supérieur mobile par rapport au corps inférieur en profondeur suivant une trajectoire d'extension et de rétractation, le tube supérieur ayant une course limitée dans un sens de rétraction par une butée de fin de course de rétractation définissant une position de fin de course de rétraction du tube supérieur par rapport au corps inférieur, et dans un sens d'extension par une butée de fin de course d'extension définissant une position de fin de course d'extension du tube supérieur par rapport au corps inférieur. Un mécanisme de verrouillage, mobile entre une position de verrouillage et une position de déverrouillage assure le verrouillage du tube supérieur par rapport au corps inférieur. Une butée intermédiaire limite la course du tube supérieur dans le sens de rétractation à une position de fin de course d'ajustement intermédiaire entre la position de fin de course de rétractation et la position de fin de course d'extension. Le conducteur peut ainsi ajuster la position du tube supérieur portant le volant, entre la position de fin de course d'extension et la position de fin de course d'ajustement. La course entre la position de fin de course d'ajustement et la fin de course de rétractation n'est parcourue que dans l'hypothèse où, lors d'une collision du véhicule, le corps du conducteur génère sur le volant et par son intermédiaire sur le tube supérieur, un effort de sectionnement dépassant un seuil prédéterminé, qui est transmis à la butée intermédiaire et sectionne la butée intermédiaire, permettant une poursuite du mouvement de rétractation du tube supérieur. Le dimensionnement de la butée intermédiaire est difficile, car le seuil prédéterminé d'effort de sectionnement doit nécessairement être supérieur aux efforts que l'on attend d'un conducteur ajustant la position du volant dans des conditions normales d'utilisation, tout étant le plus faible possible pour éviter un pic d'efforts précédant le sectionnement de la butée en cas de collision. Ces contraintes contradictoires peuvent amener soit à une valeur trop faible du seuil, qui aboutit à des sectionnements non souhaités lors d'un ajustement un peu brutal de la position du volant, soit à une valeur trop élevée du seuil, qui augmente le risque de blessure du conducteur en cas de collision.

Pour résoudre ce problème, il a été proposé dans le document DE102011056351 de remplacer la butée intermédiaire fixe de l'état de la technique par une butée intermédiaire escamotable, entraînée en rotation par une tige de serrage du mécanisme de verrouillage, et mobile entre une position active, correspondant à la position déverrouillée du mécanisme de verrouillage et une position escamotée correspondant à la position déverrouillée du mécanisme de verrouillage, la butée escamotable dans la position active limitant la course du tube supérieur dans le sens de rétractation à la position de fin de course d'ajustement intermédiaire entre la position de fin de course de rétractation et la position de fin de course d'extension, la butée escamotable en position escamotée n'interférant pas avec le tube supérieur. Ainsi, on s'assure qu'en cas de collision du véhicule, la butée intermédiaire est escamotée, et le tube supérieur est libre de se rétracter, sans pic d'effort intermédiaire. On peut également dimensionner avec une grande liberté la butée intermédiaire, pour supporter des efforts importants d'ajustement de la position du volant.

La butée escamotable a de préférence un degré de rotation limité par rapport à la tige de serrage autour de l'axe de rotation de cette dernière, et est rappelée vers la position active par un ressort. On s'assure ainsi d'un bon séquencement du verrouillage et de l'escamotage de la butée: l'escamotage de la butée n'est amorcé qu'après une rotation suffisante de la tige de serrage qui assure le verrouillage du tube supérieur par le mécanisme de verrouillage.

Mais la cinématique choisie, avec une rotation de la butée autour de l'axe de la tige, et de préférence une course morte de la tige avant l'entraînement de la butée, limite l'amplitude du mouvement de cette dernière et impose de positionner la butée escamotable dans une zone du mécanisme de colonne de direction où la tige de serrage est proche de la trajectoire du tube supérieur. Une telle zone n'existe pas toujours, ou peut être occupée par d'autres éléments de la colonne.

Par ailleurs, la butée escamotable transmet intégralement à la tige de serrage les efforts qui lui sont appliqués lorsque le mécanisme de verrouillage est déverrouillé et que le conducteur applique un effort d'ajustement important dans le sens de la rétractation, ce qui peut endommager le mécanisme de serrage.

On connaît par ailleurs, par le document EP 2 497 696 A1, un mécanisme de colonne de direction, comportant un corps inférieur et un tube supérieur mobile en profondeur par rapport au corps inférieur suivant une trajectoire d'extension et de rétractation, dans un sens de rétraction et dans un sens d'extension opposé au sens de rétractation. Un mécanisme de verrouillage, mobile entre une position de verrouillage et une position de déverrouillage, assure le verrouillage du tube supérieur par rapport au corps inférieur. Le mécanisme comporte une butée escamotable, qui passe en position active lors du déverrouillage du mécanisme de verrouillage, et qui, en position active, pénètre dans un trou de blocage formé dans le corps inférieur de la colonne.

### EXPOSÉ DE L'INVENTION

L'invention vise à remédier au moins partiellement aux inconvénients de l'état de la technique identifiés précédemment. Pour ce faire, l'invention a trait à un mécanisme de colonne de direction, comportant un corps inférieur et un tube supérieur mobile en profondeur par rapport au corps inférieur suivant une trajectoire d'extension et de rétractation, dans un sens de rétraction et dans un sens d'extension opposé au sens de rétractation. Un mécanisme de verrouillage, mobile entre une position de verrouillage et une position de déverrouillage, assure le verrouillage du tube supérieur par rapport au corps inférieur. Le mécanisme de verrouillage comporte une tige de serrage entraînée en rotation autour d'un axe de serrage. Une butée escamotable, mobile par rapport au corps inférieur et par rapport au mécanisme de verrouillage entre une position active et une position escamotée, limite en position active la course du tube supérieur dans le sens de rétractation à une position de fin de course d'ajustement, la butée escamotable en position escamotée n'interférant pas avec le tube supérieur. La butée escamotable est reliée au mécanisme de verrouillage par l'intermédiaire d'un interverrouillage de manière à être en position active lorsque le mécanisme de verrouillage est en position de déverrouillage.

Suivant un premier aspect de l'invention, le corps inférieur comporte un ou plusieurs appuis pour reprendre au moins partiellement des efforts générés par le tube supérieur sur la butée escamotable lorsque le mécanisme de verrouillage est en position déverrouillée et que le tube supérieur est en position de fin de course d'ajustement en appui contre la butée escamotable. Ces appuis peuvent être indifféremment des points d'appui, des arêtes ou des surfaces d'appui solidaires du corps inférieur et contre lesquelles la butée escamotable peut venir en appui.

Le ou les appuis incluent de préférence au moins un appui perpendiculaire à la trajectoire du tube supérieur au niveau de la butée escamotable en position active. Par ailleurs, le ou les appuis incluent de préférence une ou plusieurs surfaces d'appui parallèles à la trajectoire de la butée escamotable entre la position active et la position escamotée. On limite ainsi la transmission à l'interverrouillage et au mécanisme de verrouillage d'efforts exercés par le conducteur sur le tube supérieur et sur la butée escamotable.

Suivant un deuxième aspect de l'invention, le corps inférieur est pourvu de moyens de guidage de la butée escamotable entre la position escamotée et la position active. Ces moyens de guidages permettent une transmission à distance du mouvement du mécanisme de verrouillage, de sorte que l'on dispose d'une plus grande liberté de positionnement de la butée escamotable.

Ce deuxième aspect de l'invention peut avantageusement être combiné avec le premier aspect de l'invention. Dans ce cas, on peut notamment prévoir que le ou les appuis fassent partie des moyens de guidage, et constitue des points, arêtes ou surfaces de guidage.

En pratique, les moyens de guidage peuvent avantageusement être des surfaces de glissement directement au contact de surfaces correspondantes de la butée escamotable. Il est toutefois envisageable de prévoir des organes intermédiaires, par exemple des corps roulants interposés entre des surfaces de glissement prévues sur le corps inférieur et sur la butée escamotable.

Suivant un mode de réalisation préféré, la butée escamotable a un mouvement de translation parallèlement à un axe de translation fixe par rapport au corps inférieur. Les moyens de guidage sont dans ce cas préférentiellement constitués par une ou plusieurs surfaces de guidage, planes et parallèles à l'axe de translation ces surfaces pouvant le cas échéant être réduite à des arêtes ou être quasi ponctuelles.

Alternativement, la butée escamotable peut avoir un mouvement de rotation autour d'un axe fixe par rapport au corps inférieur et être guidée par une surface de guidage cylindrique formant un palier lisse entre le corps inférieur et la butée escamotable.

La position de fin de course d'ajustement est de préférence intermédiaire entre une position de fin course d'extension et une position de fin de course de rétractation du tube supérieur par rapport au corps inférieur. De préférence, la trajectoire d'extension et de rétractation est une translation parallèlement à un axe fixe par rapport au corps inférieur, qui peut avantageusement être un axe de rotation d'un embout d'arbre de direction guidé en rotation à l'intérieur du tube supérieur. Mais l'invention trouve également à s'appliquer si la trajectoire d'extension et de rétractation est courbe.

Suivant un mode de réalisation particulièrement avantageux, l'interverrouillage comporte un ressort de rappel de la butée escamotable vers la position de verrouillage. Ce ressort permet de reprendre des jeux dans l'interverrouillage. Par ailleurs, dans un mode de réalisation où il n'est pas prévu que la butée escamotable soit entraînée vers sa position escamotée par le mécanisme de verrouillage, elle permet de maintenir la butée en position active dans l'état verrouillé du mécanisme de verrouillage, comme il sera expliqué plus loin.

Suivant un mode de réalisation, le corps inférieur est mobile par rapport à un support fixe du mécanisme de colonne de direction suivant une trajectoire de basculement, qui peut avantageusement être une rotation autour d'un axe de pivotement fixe par rapport au support fixe, le support fixe étant pourvu d'une interface de fixation à une superstructure de véhicule, le mécanisme de verrouillage dans la position de verrouillage verrouillant le corps inférieur par rapport au support fixe, le mécanisme de verrouillage dans la position de déverrouillage libérant le corps inférieur.

Suivant un mode de réalisation, l'interverrouillage est tel que la butée escamotable est en position escamotée lorsque le mécanisme de verrouillage est en position de verrouillage.

Suivant un mode de réalisation alternatif, le mécanisme de verrouillage libère la butée escamotable lorsqu'il passe de la position de déverrouillage à la position de verrouillage, mais ne l'entraîne pas vers la position escamotée. Dans cette hypothèse, la butée escamotable est avantageusement maintenue en position active, par exemple par l'intermédiaire d'un ressort. Le tube supérieur est pourvu d'un poussoir coopérant avec une face réceptrice de la butée escamotable pour entraîner la butée escamotable vers la position escamotée lorsque le mécanisme de verrouillage est en position de verrouillage et qu'une force supérieure à un seuil prédéterminé est appliquée sur le tube supérieur et entraîne le tube supérieur suivant la trajectoire d'extension et de rétractation dans le sens de rétractation. En pratique, le poussoir ou la face réceptrice forme une rampe permettant de transmettre le mouvement du tube supérieur à la butée escamotable. L'avantage de cette solution est d'éviter tout mouvement de la butée escamotable lors des phases d'ajustement de la position du mécanisme de colonne de direction, ce qui minimise les bruits et les frottements. Ce n'est que dans l'hypothèse d'une collision que la butée escamotable s'efface. Cette solution a toutefois deux conséquences dont il est nécessaire de tenir compte lors du dimensionnement du mécanisme de colonne de direction. D'une part, l'interaction entre poussoir et butée escamotable a pour effet, lorsque le mécanisme de verrouillage est déverrouillé, de transmettre à l'interverrouillage et au mécanisme de verrouillage une partie au moins des efforts d'ajustement que le conducteur peut appliquer sur le volant pour tenter de rétracter la colonne au-delà de la position de fin de course d'ajustement définie par la butée escamotable. D'autre part, en cas de collision, le tube supérieur doit déplacer la butée escamotable, ce qui se traduit par une augmentation momentanée de la résistance à la rétractation de la colonne. Il faut donc tenir compte de cette contrainte dans le dimensionnement du poussoir et de la face réceptrice.

L'axe de serrage est de préférence fixe par rapport au corps inférieur. De préférence, la tige de serrage est fixe en translation par rapport corps inférieur parallèlement à l'axe de serrage. La tige de serrage peut être entraînée en rotation par un levier d'entraînement pourvu d'une poignée de prise en main, le levier pouvant être soit solidaire de la tige de serrage, soit lui être lié par un dispositif de transmission. La tige de serrage peut également être entraînée en rotation par un moteur électrique. Le corps inférieur comporte au moins un palier de guidage en rotation de la tige de serrage, et de préférence deux paliers distants l'un de l'autre le long de l'axe de serrage, de préférence latéralement de part et d'autre d'un plan médian du corps inférieur, perpendiculaire à l'axe de serrage. Les paliers peuvent le cas échéant être de simples alésages dans des flasques du corps inférieur.

De préférence, la tige de serrage s'étend entre deux flasques latéraux du support fixe, situés latéralement de part et d'autre du sous-ensemble mobile, et traverse de préférence les flasques latéraux, qui présentent à cet effet des ouvertures oblongues.

De préférence, l'interverrouillage comporte un organe d'entraînement solidaire en rotation de la tige de serrage, coopérant avec un organe récepteur solidaire de la butée escamotable. Suivant un mode de réalisation, l'organe d'entraînement comporte une came solidaire de la tige de serrage et l'organe récepteur comporte une surface réceptrice, de préférence formée sur la butée escamotable. Suivant un autre mode de réalisation, l'organe d'entraînement comporte un secteur denté ou une roue dentée, l'organe récepteur comportant une crémaillère solidaire de la butée escamotable.

De manière préférentielle, la butée escamotable est guidée en translation perpendiculairement à l'axe de serrage.

Suivant un mode de réalisation, l'organe d'entraînement comporte un filetage hélicoïdal, l'organe récepteur comportant un écrou.

Pour ce mode de réalisation, mais également pour les modes de réalisation à came ou à crémaillère, on peut prévoir que la butée escamotable soit guidée en translation parallèlement à l'axe de serrage.

Suivant un autre mode de réalisation, l'organe d'entraînement comporte une denture d'entraînement à renvoi d'angle, l'organe récepteur comportant une denture réceptrice à renvoi d'angle. Dans cette hypothèse, la butée escamotable est guidée en rotation perpendiculairement à l'axe de serrage. Un guidage de la butée escamotable en rotation perpendiculairement à l'axe de serrage est également envisageable dans le mode de réalisation à came.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue isométrique d'un mécanisme de colonne de direction selon un premier mode de réalisation de l'invention;
- la figure 2, une vue en coupe transversale du mécanisme de colonne de direction de la figure 1, dans un plan perpendiculaire à l'axe du mécanisme de direction et passant par un axe de rotation d'une vis de serrage d'un mécanisme de verrouillage du mécanisme de colonne de direction;
- la figure 3, une vue éclatée du mécanisme de colonne de direction de la figure 1;
- la figure 4, une vue de côté d'une came et d'une butée escamotable du mécanisme de colonne de direction de la figure 1;
- la figure 5, une vue isométrique d'un corps inférieur du mécanisme de colonne de direction de la figure 1, permettant de visualiser des surfaces de guidage de la butée escamotable de la figure 4;
- la figure 6, une vue isométrique du corps inférieur de la figure 5 suivant un autre angle de vue, et partiellement écorchée pour visualiser des surfaces de guidage de la butée escamotable de la figure 4;
- la figure 7, une vue isométrique d'une pièce du corps inférieure délimitant les surfaces de guidage illustrées sur les figures 5 et 6;
- la figure 8, une vue éclatée de la came et de la butée escamotable du mécanisme de colonne de direction de la figure 1;
- la figure 9, une vue de côté du mécanisme de colonne de direction de la figure 1, dans un état déverrouillé, dans une position nominale, intermédiaire entre une position de fin de course d'extension et une position de fin de course d'ajustement ;
- la figure 10, une vue de côté du mécanisme de colonne de direction de la figure 1, dans l'état déverrouillé, en position de fin de course d'extension;
- la figure 11, une vue de côté du mécanisme de colonne de direction de la figure 1, dans l'état déverrouillé, en position de fin de course d'ajustement;
- la figure 12, une vue de côté du mécanisme de colonne de direction de la figure 1, dans un état verrouillé, dans la position nominale;
- la figure 13, une vue de côté du mécanisme de colonne de direction de la figure 1, dans un état verrouillé, dans une position de fin de course de rétractation;
- la figure 14, une vue de côté d'un mécanisme de colonne de direction selon un deuxième mode de réalisation de l'invention, dans un état déverrouillé, dans une position nominale, intermédiaire entre une position de fin de course d'extension et une position de fin de course d'ajustement;
- la figure 15, une vue de côté du mécanisme de colonne de direction de la figure 14, dans un état verrouillé, dans la position nominale;
- la figure 16, une vue de côté d'un mécanisme de colonne de direction selon un troisième mode de réalisation de l'invention, dans un état verrouillé, dans une position nominale, intermédiaire entre une position de fin de course d'extension et une position de fin de course d'ajustement ;
- la figure 17, une vue de côté du mécanisme de colonne de direction de la figure 16, dans l'état déverrouillé, en position de fin de course d'extension;
- la figure 18, une vue de côté du mécanisme de colonne de direction de la figure 16, dans l'état déverrouillé, en position de fin de course d'ajustement;
- la figure 19, une vue de côté du mécanisme de colonne de direction de la figure 16, dans un état verrouillé, dans une position de fin de course de rétractation;
- la figure 20, une vue de côté d'un détail d'un mécanisme de colonne de direction selon un quatrième mode de réalisation de l'invention, dans une position déverrouillée;
- la figure 21, une vue isométrique d'un détail du mécanisme de colonne de direction de la figure 20, dans la position déverrouillée;
- la figure 22, une vue isométrique d'un détail du mécanisme de colonne de direction de la figure 20, dans la position verrouillée
- la figure 23, une vue schématique en coupe transversale d'un détail d'un mécanisme de colonne de direction suivant un cinquième mode de réalisation de l'invention, en position déverrouillée;
- la figure 24, une vue schématique en coupe transversale d'un détail du mécanisme de colonne de direction de la figure 23, en position verrouillée;
- la figure 25, une vue schématique en coupe transversale d'un détail d'un mécanisme de colonne de direction suivant un sixième mode de réalisation de l'invention, en position déverrouillée;
- la figure 26, une vue schématique en coupe transversale d'un détail du mécanisme de colonne de direction de la figure 25, en position verrouillée.

Pour plus de clarté, les éléments identiques ou similaires sont repérés par des signes de référence identiques sur l'ensemble des figures.

### DESCRIPTION DÉTAILLÉE DE MODES DE RÉALISATION

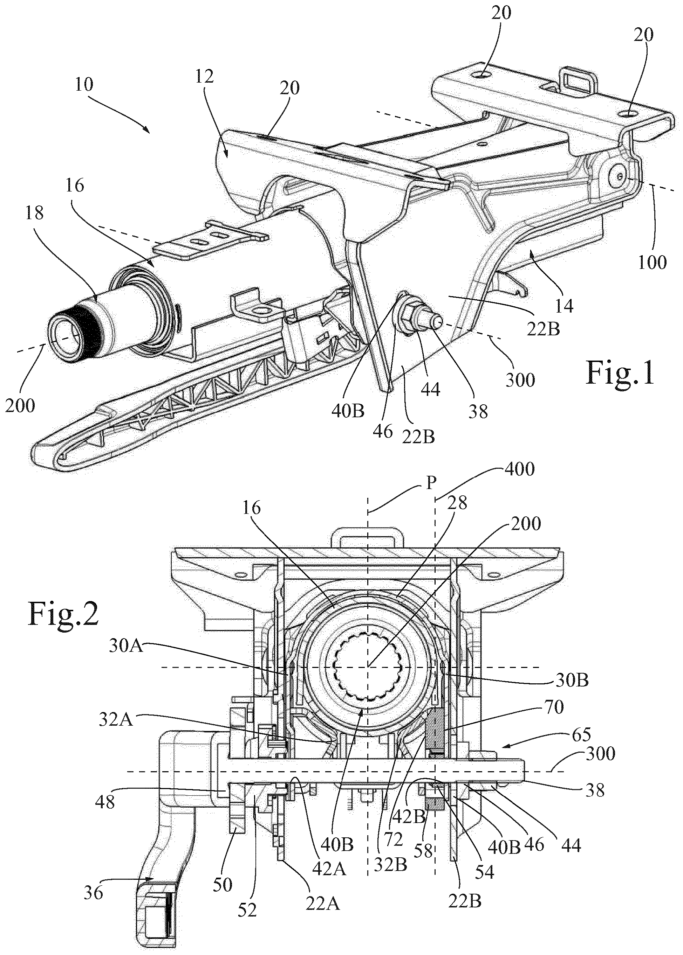

Sur les figures **1** à **3** est illustrée une colonne de direction **10** pour un véhicule automobile, intégrant un support fixe **12** et un sous-ensemble mobile, comportant un corps inférieur **14** pivotant par rapport au support fixe **12** autour d'un axe de pivotement **100,** et un tube supérieur **16** qui sert de logement et de guidage en rotation pour un embout d'arbre de direction **18** tournant autour d'un axe de rotation **200** perpendiculaire à l'axe de pivotement **100,** et de préférence sécant avec ce dernier. De manière connue, le tube supérieur **16** coulisse dans le corps inférieur **14** suivant une trajectoire rectiligne parallèle à un axe géométrique d'ajustement fixe par rapport au corps inférieur **14,** qui se trouve être confondu avec l'axe de rotation **200** de l'embout d'arbre de direction **18.** On peut en outre définir un plan médian longitudinal **P** contenant l'axe de rotation et d'ajustement **200** et perpendiculaire à l'axe de pivotement **100.**

Le support fixe **12,** réalisé de préférence d'une pièce ou par assemblage mécano-soudé, comporte deux platines de fixation à une superstructure de véhicule avec des trous de fixation **20,** et des flasques latéraux **22A, 22B** entre lesquels est positionné le corps inférieur **14** du sous-ensemble mobile. Les flasques latéraux **22A, 22B** sont équipés de paliers **24A, 24B** pour guider en rotation le corps inférieur **14** du sous-ensemble mobile autour de l'axe de pivotement **100.**

Le corps inférieur **14** est essentiellement constitué d'une tôle principale **26** conformée de manière à former un fond arqué **28** prolongé par deux flasques latéraux sensiblement parallèles **30A, 30B,** et de deux éléments de bride de serrage en vé **32A, 32B** en appui sur des faces internes des deux flasques **30A, 30B** et destinés à venir en regard de surfaces correspondantes du tube supérieur **16.**

Un mécanisme de verrouillage **34** assure la fixation simultanée du tube supérieur **16** et du corps inférieur **14** par rapport au support fixe **12.** Ce mécanisme de verrouillage **34** comporte de manière connue un levier de serrage **36** constituant une poignée pour le conducteur, ce levier entraînant, directement ou indirectement, une tige de serrage **38** autour d'un axe de serrage **300** perpendiculaire à l'axe d'ajustement **200** et parallèle à l'axe de pivotement **100.** La tige de serrage **38** traverse deux glissières arquées ou droites **40A, 40B,** pratiquées dans les flasques latéraux **22A, 22B** du support fixe, et deux trous **42A, 42B** alignés pratiqués dans les flasques latéraux **30A, 30B** du corps inférieur. Un écrou **44** est vissé à une extrémité filetée de la tige de serrage **38,** opposée au levier de serrage **36.** Une rondelle d'appui **46** est interposée entre l'écrou **44** et le flasque latéral **22B** du support fixe. La tige de serrage **38** comporte en outre une tête **48** située à une extrémité opposée à l'extrémité filetée. Une came de serrage mobile **50** solidaire en rotation de la tige de serrage **38** s'interpose entre la tête **48** de la tige de serrage et une pièce de connexion **52** coulissant dans la glissière **40A,** cette pièce de connexion **52** formant à la fois une came fixe en rotation par rapport à la tige de serrage **38** et un palier lisse pour la tige de serrage **38.**

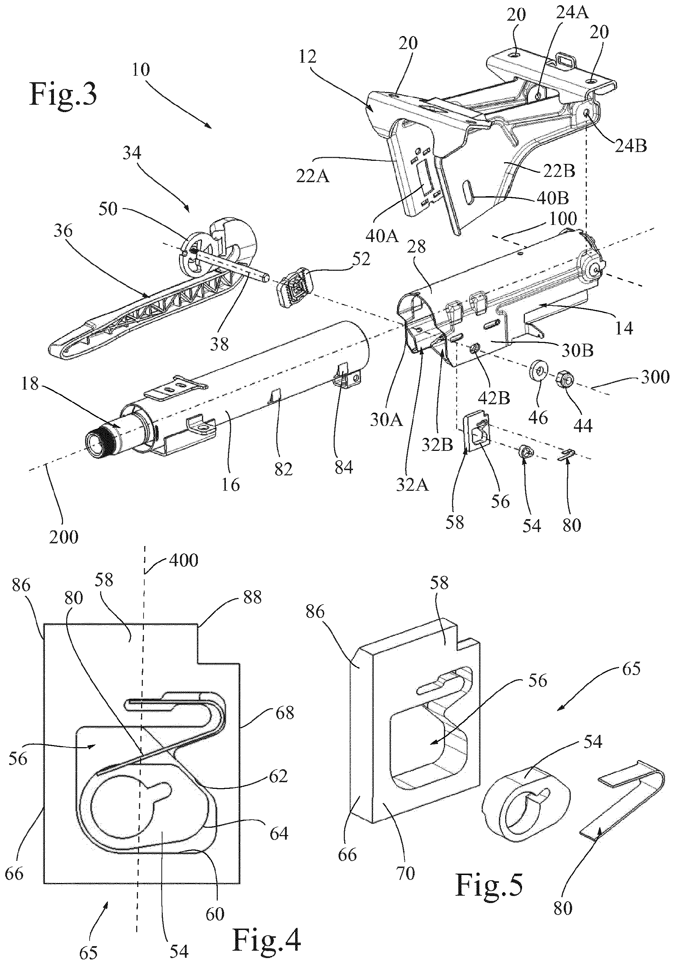

La tige de serrage **38** est en outre équipée d'une came d'interverrouillage **54** disposée latéralement d'un côté du plan longitudinal médian **P** opposé au levier de serrage **36,** dans le volume délimité par les flasques **30A, 30B** du corps inférieur **14.** La fixation de la came d'interverrouillage **54** sur la tige de serrage **38** peut être obtenue par tout moyen approprié, par exemple par clavetage, par coopération de forme avec un relief prévu sur la tige de serrage **38** ou par collage ou soudage. La came d'interverrouillage **54** est logée à l'intérieur d'une cavité **56** formée dans une butée escamotable **58** illustrée en détail sur les figures **4** et **5****.** La cavité **56** définit des surfaces planes ou concaves **60, 62** au contact desquelles peuvent venir s'appuyer des surfaces correspondantes planes ou convexes **64** de la came d'interverrouillage **54** lors de la rotation de la tige de serrage **38.** La came d'interverrouillage **54** et la cavité **56** forment ensemble un interverrouillage **65** entre le mécanisme de verrouillage **34** et la butée escamotable **58.**

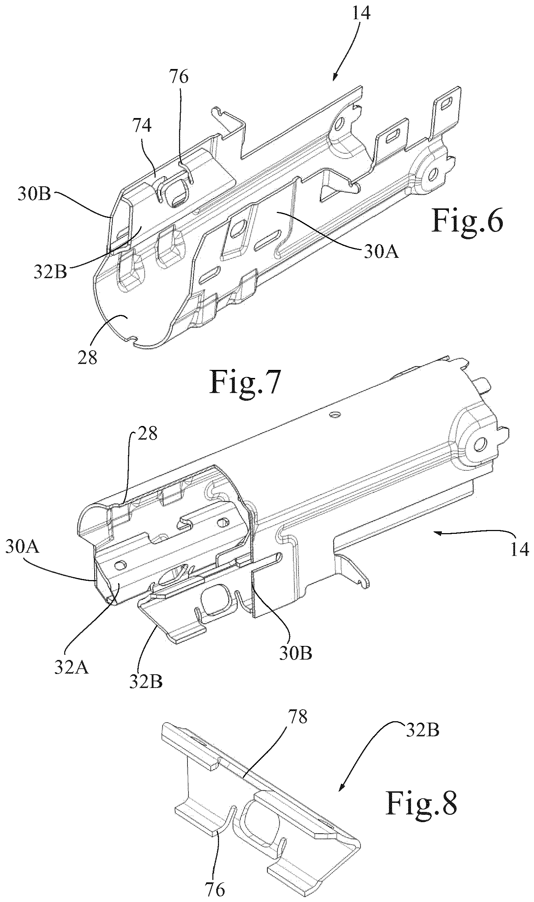

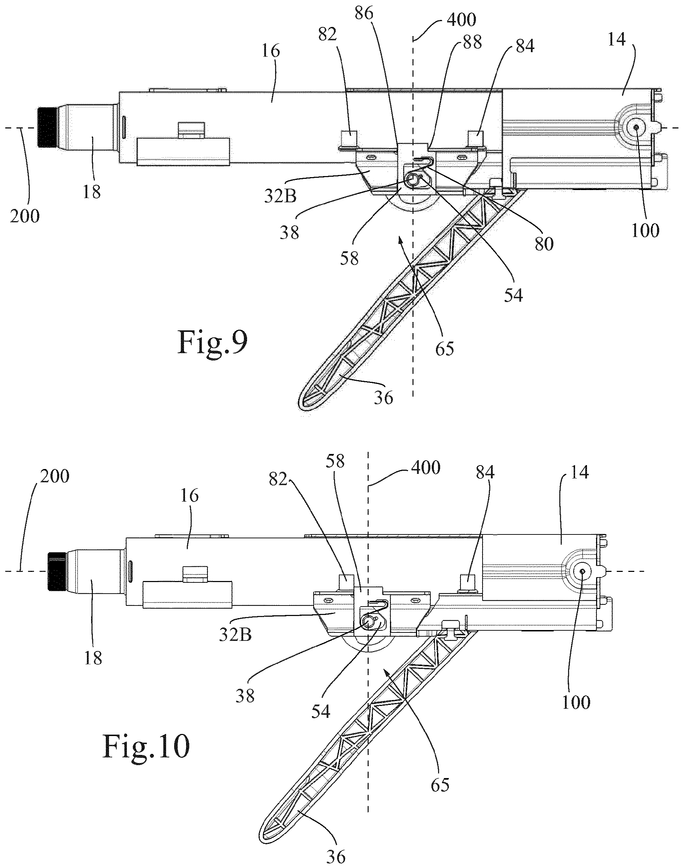

La butée escamotable **58** présente un profil extérieur avec quatre faces latérales planes et deux à deux parallèles **66, 68, 70, 72,** qui permettent un guidage de la butée escamotable **58** en translation par glissement le long de facettes et/ou arêtes de guidage prévues à cet effet dans le corps inférieur et sur l'élément de bride de serrage **32B.** Ces facettes et arêtes sont visibles sur les figures **6** à **8** et sont comprennent une face plane intérieure **74** du flasque **30B** du corps inférieur **14** et des rebords **76, 78** de découpes prévues sur l'élément de bride **32B** en vé. La butée escamotable **58** peut donc coulisser en translation par rapport au corps inférieur **14,** parallèlement à un axe **400** perpendiculaire à l'axe de rotation de la tige de serrage, entre une position escamotée illustrée sur les figures **2****,** **12** et **13****,** et une position active illustrée sur les figures **9, 10** et **11****.** L'interverrouillage **65** inclut de plus une lame de ressort **80** montée dans la cavité **56** entre la came d'interverrouillage **54** et la butée escamotable **58,** pour rappeler la butée escamotable **58** vers la position active.

Le tube supérieur **16** est équipé d'une butée de fin de course d'ajustement **82** et d'une butée de fin de course d'extension **84,** situées à distance l'une de l'autre le long de l'axe d'ajustement **200,** la butée de fin de course d'ajustement **82** étant plus proche de l'embout d'arbre de direction **18.** Dans la position active, la butée escamotable **58** présente d'une part une face **86** tournée vers la butée de fin de course d'ajustement **82,** qui interfère avec la trajectoire de la butée de fin de course d'ajustement **82** dans le sens de la rétractation, et d'autre part une face **88** tournée vers la butée de fin de course d'extension **84,** qui interfère avec la butée de fin de course d'extension **84** dans le sens de l'extension.

Le mécanisme de colonne de direction **10** fonctionne de la manière suivante.

Le mécanisme de verrouillage **34** est mobile entre une position de verrouillage illustrée sur les figures **2****,** **12** et **13** et une position déverrouillée illustrée sur les figures **9, 10** et **11****.**

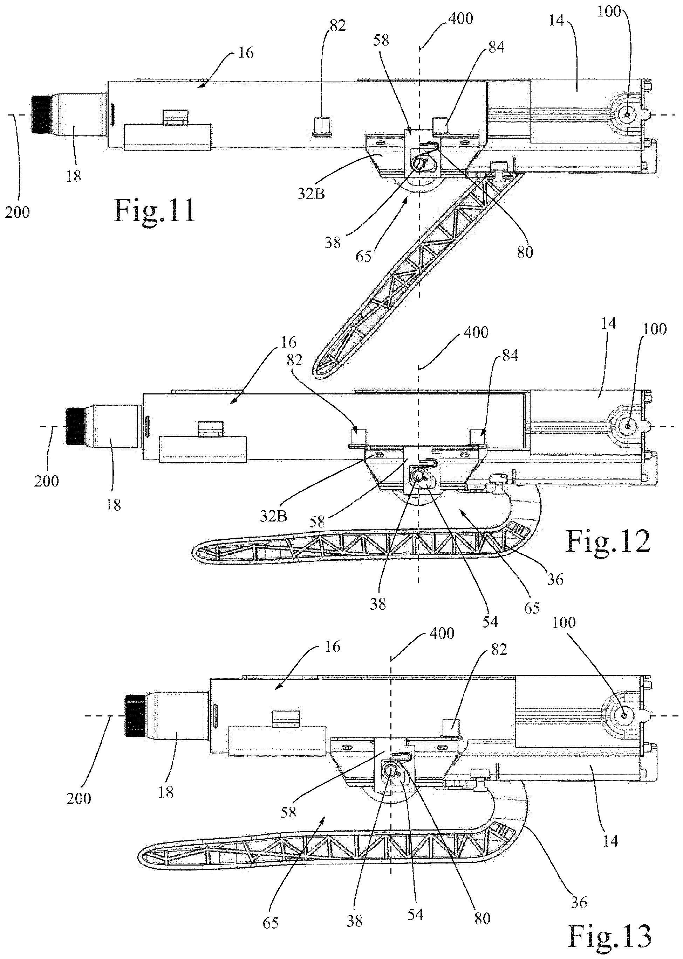

Dans la position de verrouillage, le levier de serrage **36** est sensiblement parallèle au tube supérieur **16.** La position angulaire de la came de serrage **54** est alors telle que les flasques **22A, 22B** du support fixe **12** et les flasques **30A, 30B** du corps inférieur **14** sont contraints élastiquement et fléchissent l'un vers l'autre et vers le plan longitudinal médian **P,** entraînant les éléments de brides **32A, 32B** qui viennent pincer le tube supérieur **16** contre la paroi de fond **28** du corps inférieur **14.** Le tube supérieur **16** est alors verrouillé en position par serrage contre le corps inférieur **14,** qui est lui-même verrouillé par serrage des flasques **30A, 30B** contre les flasques **22A, 22B.** La came d'interverrouillage **54** est en appui contre la paroi plane inférieure **60** de la cavité **56** de la butée escamotable **58** et maintient la butée escamotable **58** en position escamotée. Dans la position nominale de conduite de la figure **12****,** il n'est pas possible au conducteur du véhicule de déplacer le tube supérieur **16.** En cas de collision, le corps du conducteur, en venant au contact du volant fixé au tronçon d'arbre de direction **18,** imprime sur le tube supérieur **16** un effort qui, dès qu'il atteint un seuil déterminé par le mécanisme de verrouillage **34** et correspondant à la limite de la composante axiale des efforts résistants statiques générés par les éléments de bride **32A, 32B** et la paroi de fond **28** du corps inférieur **14** sur le tube supérieur **16,** provoque une rétractation du tube supérieur **16** dans le corps inférieur **14,** parallèlement à l'axe d'ajustement **200.** Ce mouvement de rétractation du mécanisme de colonne de direction **10** n'est pas entravé par la butée escamotable **58** dans sa position escamotée, et l'on voit sur la figure **13** que la butée de fin de course d'ajustement **82** a pu dépasser la position de la butée escamotable **58.** La course de rétractation du tube supérieur est alors limitée par le contact avec un autre élément du mécanisme de colonne de direction, qui définit une position de fin de course de rétractation.

Lorsque, à partir de la position nominale de la figure **12****,** et alors que le véhicule est à l'arrêt, le conducteur souhaite déverrouiller la colonne pour modifier le positionnement du volant, il manoeuvre le levier de serrage **36** jusqu'à la position illustrée sur la figure **9****.** La rotation du levier de serrage **36** entraîne la tige de serrage **38** en rotation autour de son axe **300.** La came de serrage **50** tourne également et libère les flasques **32A, 32B,** autorisant à la fois un mouvement translatif du tube supérieur **16** dans le corps inférieur **14** et un mouvement de pivotement du corps inférieur **14** dans le support fixe **12,** limité par les dimensions des glissières **40A, 40B.** La rotation de la tige de serrage **38** provoque également la rotation de la came d'interverrouillage **54,** qui libère la butée escamotable **58.** Le ressort **80** rappelle alors la butée escamotable **58** dans sa position active, comme illustré sur la figure **9****.** Le mouvement du tube supérieur **16** dans le corps inférieur **14** se trouve donc limité dans le sens de la rétractation par l'interférence de la face **86** la butée escamotable **58** avec la butée de fin de course d'ajustement **82,** comme illustré sur la figure **10****,** et dans le sens de l'extension par l'interférence entre la face **88** de la butée escamotable **58** et la butée de fin de course d'extension **84,** comme illustré sur la figure **11****.** Les efforts du conducteur pour rétracter le volant et le tube supérieur **16** au-delà de la position de fin de course d'ajustement sont transmis par la butée de fin de course d'ajustement **82** à la butée escamotable **58** et par celle-ci aux parois de guidage **76, 78.**

Lorsque le conducteur a achevé l'ajustement du positionnement du volant et du tube supérieur, il tourne de nouveau le levier de serrage **36,** et le mécanisme de colonne de direction **10** revient dans l'état illustré sur la figure **12****.**

Diverses variations de l'interverrouillage **65** sont possibles. La came d'interverrouillage **54** peut être conformée de manière à ce que dans la position déverrouillée, la came **54** soit en appui positif sur une paroi **62** de la cavité **56,** pour confirmer le positionnement de la butée escamotable en position active. On peut faire en sorte que la came d'interverrouillage **54,** dans la position active, soit positionnée sans créer un verrouillage, c'est-à-dire d'une manière telle qu'un effort appliqué à la butée escamotable **58** vers la position escamotée fasse tourner la came d'interverrouillage **54** et la tige de serrage **38.** À l'inverse, on peut prévoir une irréversibilité de la transmission, de sorte que dans la position active du levier de serrage **36,** une force appliquée sur la butée escamotable **58** vers la position escamotée ne permette pas de rotation de la came d'interverrouillage **54.**

On peut également prévoir qu'il n'y ait pas de contact entre la came d'interverrouillage **54** et la butée escamotable **58** lorsque le levier de serrage **38** est en position de déverrouillage et que la butée escamotable **58** est en position active. C'est alors uniquement le ressort de rappel **80** qui assure le maintien en position de la butée escamotable **58.**

La came d'interverrouillage **54** peut être conformée de manière à prévoir un séquencement souhaité entre la remontée de butée escamotable **58** en position active et la libération du tube supérieur **16.** On pourra rendre les deux événements simultanés, ou au contraire prévoir que l'un s'achève avant l'autre. On pourra par exemple prévoir d'achever la remontée de la butée escamotable **58** en position active avant de totalement libérer le tube supérieur **16,** de manière qu'il ne soit pas possible de déplacer le tube supérieur **16** avant que la butée escamotable **58** soit en active.

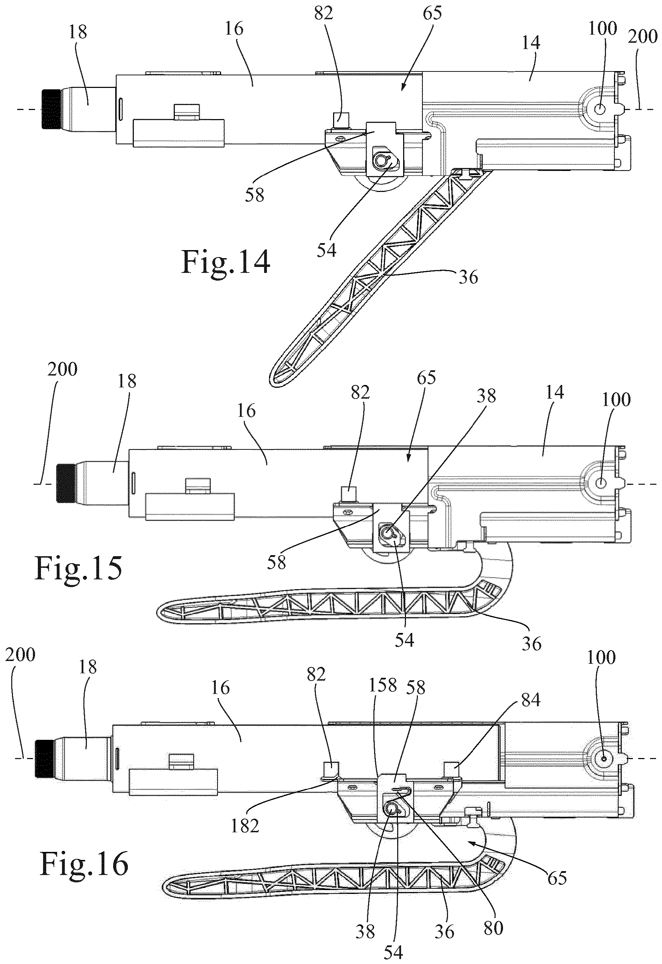

Suivant une variante illustrée sur les figures **14** et **15****,** on peut omettre le ressort de rappel **80** et déplacer la butée escamotable **58** uniquement à l'aide de la came d'interverrouillage **54.** Dans cette hypothèse, la came d'interverrouillage **54** coopère avec une première surface **60** de la cavité **56** pour maintenir la butée escamotable **58** en position escamotée lorsque le levier de serrage **36** est en position de verrouillage, et avec une deuxième surface **62** de la cavité **56** pour maintenir la butée escamotable **58** en position active lorsque le levier de serrage **36** est en position de déverrouillage.

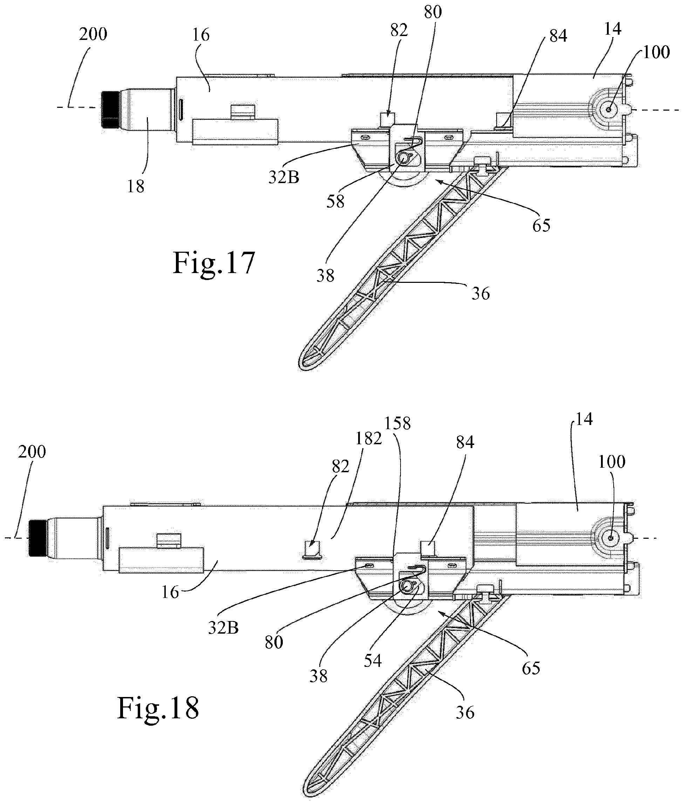

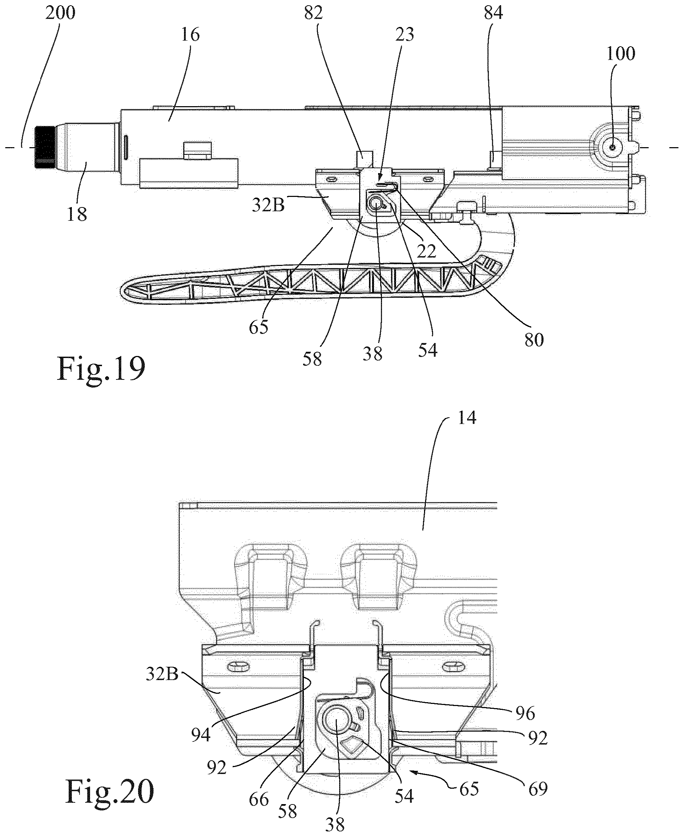

Suivant un mode de réalisation illustré sur les figures **16** à **19****,** on peut éviter tout déplacement de la butée escamotable **58** hors des situations de collision. La butée escamotable **58** a été ici modifiée de manière à comporter un chanfrein **158** du côté de faisant face à la butée de fin de course d'ajustement **82,** cette dernière présentant un chanfrein **182** correspondant. En position nominale verrouillée sur la figure **16****,** et à la différence des modes de réalisation précédents, la came d'interverrouillage **54** n'interfère pas avec les parois de la cavité **56,** de sorte que la butée escamotable **58** est maintenue en position active sous l'effet du ressort de rappel **80.** En position déverrouillée, sur les figures **17** et **18****,** la came a tourné dans la cavité, et est venue en appui sur une face **62** de la cavité pour s'opposer à un déplacement de la butée escamotable **58.** Les mouvements d'ajustement en position du tube supérieur **16** par rapport au corps inférieur **14** sont limités, comme dans les modes de réalisation précédents, par les interférences entre la butée escamotable **58** et les butées de fin de course d'ajustement **82** et de fin de course d'extension **84,** comme illustré sur les figures **17** et **18****.** Dans la position de fin de course d'ajustement, le chanfrein **182** de la butée de fin de course d'ajustement **82** vient en appui contre le chanfrein **158** de la butée escamotable **58,** mais la came d'interverrouillage **54** (assistée le cas échéant du ressort de rappel **80**) empêche la butée escamotable **58** de passer en position escamotée. Lorsque, à partir de la position verrouillée de la figure **16****,** une collision entraîne le conducteur au contact du volant, la force exercée sur le tube supérieur **16** entraîne le mécanisme de colonne de direction **10** dans la position rétractée (non illustrée) en passant par la position intermédiaire de la figure **19****.** Cette position illustre l'effacement de la butée escamotable **58** au passage de la butée de fin de course d'ajustement **82,** facilité par les chanfreins **158, 182** qui permettent de vaincre l'effort élastique du ressort de rappel **80,** le mouvement de la butée escamotable **58** vers la position escamotée n'étant pas empêché par la came **54.**

Ce mode de réalisation introduit un pic d'effort au passage de la position de fin de course d'ajustement lors d'une collision, mais cet effort est déterminé par le ressort de rappel **80** (qui peut être relativement faible) et indépendant de l'effort nominal que la butée escamotable **58** doit tenir lors des ajustements de position du tube supérieur **16** (cet effort nominal étant déterminé par la came d'interverrouillage **54**). L'absence de mouvement de la butée escamotable **58** lors du verrouillage et du déverrouillage du mécanisme de verrouillage évite les risques de bruyances ou d'usure lors des ajustements de position. Elle limite également l'énergie à déployer pour passer d'une position à l'autre.

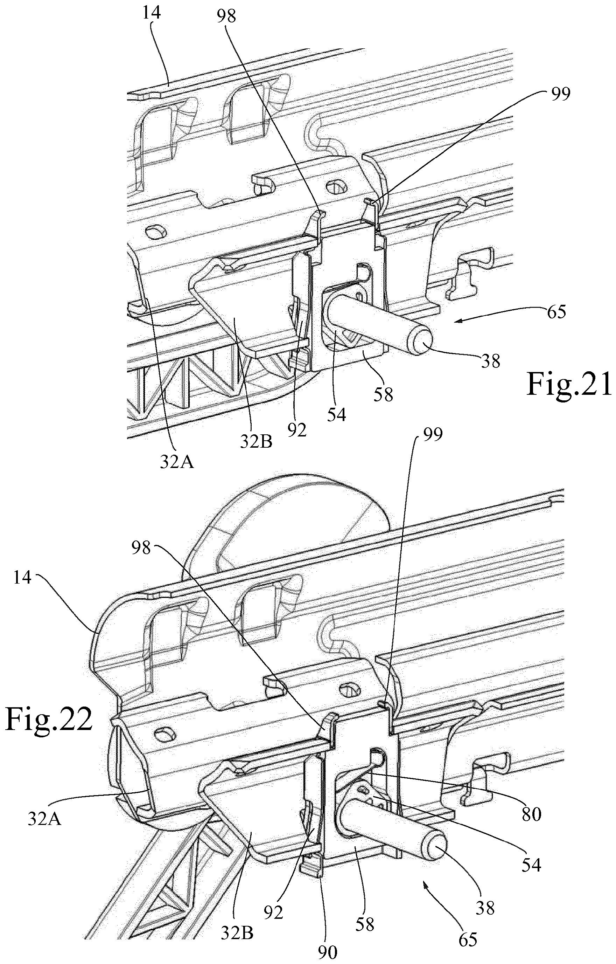

Sur les figures **20** à **22** est illustré un autre mode de réalisation de l'invention, qui diffère du mode de réalisation des figures **1** à **13** par l'adjonction d'un fourreau **90** de guidage de la butée escamotable **58.** Ce fourreau **90,** réalisé en matière plastique, vient s'encliqueter grâce à des languettes élastiques **92** sur les parois de l'élément de bride **32B** et présente deux parois planes de guidage **94, 96** qui viennent en contact glissant avec les parois **66, 68** de la butée escamotable. Le fourreau **90** présente également deux tampons **98, 99** qui, dans la position déverrouillée de la figure **22****,** sont en contact avec la butée escamotable **58** en position active, pour s'interposer entre la butée escamotable **58** et les butées de fin de course d'extension **84** et de fin de course d'ajustement **82,** afin d'amortir les chocs lors des arrivées en position de fin de course lors de l'ajustement de la position du tube supérieur **16.** Lorsque le mécanisme de colonne de direction **10** est en position verrouillée, la butée escamotable **58** est en position escamotée comme illustré sur les figures **20** et **21****,** et les tampons **98, 99** font saillie sur la trajectoire potentielle de la butée de fin de course d'ajustement **82.** En cas de collision, la butée de fin de course d'ajustement **82,** en arrivant à la hauteur des tampons **98, 99,** les sectionne, et continue son chemin vers la position de fin de course de rétractation. L'effort pour sectionner les tampons **98, 99** est très faible par rapport aux efforts générés sur le tube supérieur au moment de la collision. Toutefois, s'il est nécessaire de minimiser l'effort de sectionnement, on peut prévoir un amincissement à la liaison entre les tampons **98, 99** et le reste du fourreau **90.** On peut également ne pas prévoir de tampons **98, 99.**

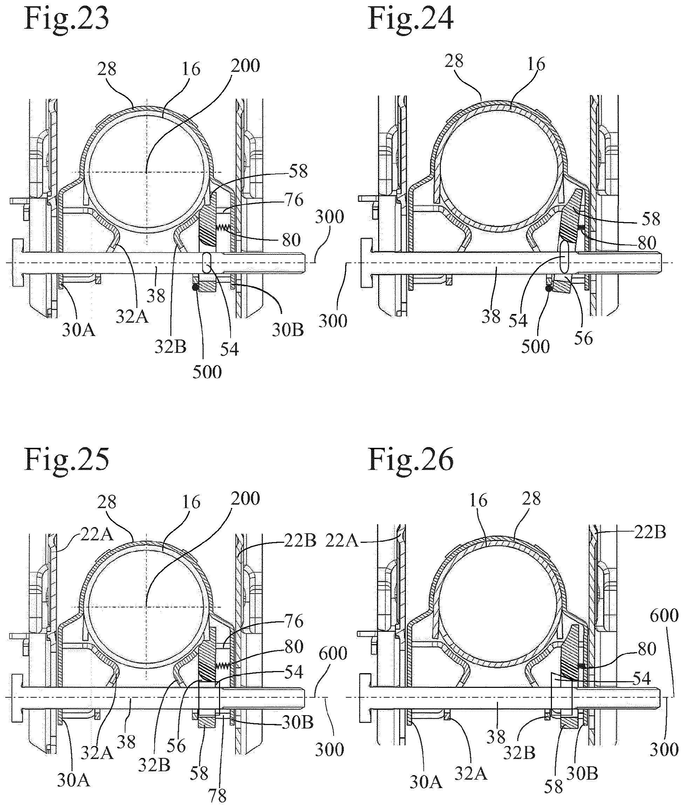

Suivant un autre mode de réalisation illustré sur les figures **23** et **24****,** on peut prévoir que la butée escamotable ne soit plus guidée en translation par rapport au corps inférieur comme dans les modes de réalisation précédents, mais en rotation autour d'un axe de basculement matérialisé par une articulation **500** fixe par rapport à un élément du corps inférieur, ici l'élément de bride **32B.** L'axe de basculement est ici parallèle à l'axe d'ajustement **200,** bien que d'autres orientations soient possibles. La came d'interverrouillage **54,** solidaire de la vis de serrage comme dans les autres modes de réalisation, est logée dans une cavité **56** de la butée escamotable **58** et coopère avec des faces incurvées de la cavité **56** pour entraîner la butée escamotable **58** en rotation autour de l'axe de basculement de la position active de la figure **23** lorsque la vis est en position de déverrouillage, à la position escamotée de la figure **24** lorsque la vis est en position de verrouillage. Un ressort de rappel **80** assure le retour de la butée escamotable **58** dans la position active de la figure **23****,** lorsque la vis de serrage **38** retourne à la position de déverrouillage. Dans ce mode de réalisation, comme dans les précédents, la butée escamotable est logée dans une découpe de l'élément de bride **32B** présentant des rebords **76** qui forment des faces d'appui pour la butée escamotable **58** dans la position active et des faces de guidage de la butée escamotable **58** entre la position active et la position escamotée.

Suivant un autre mode de réalisation illustré sur les figures **25** et **26****,** on peut prévoir que la butée escamotable ne soit pas guidée en translation perpendiculairement à l'axe de serrage **300** mais parallèlement à celui-ci. La came d'interverrouillage **54,** solidaire de la vis de serrage comme dans les autres modes de réalisation, est logée dans une cavité **56** de la butée escamotable **58** et coopère avec des faces incurvées de la cavité **56** pour entraîner la butée escamotable **58** en translation parallèlement à un axe de translation **600** lui-même parallèle à l'axe de serrage **300,** de la position escamotée de la figure **25** lorsque la vis est en position de verrouillage, à la position active de la figure **26** lorsque la vis est en position de déverrouillage. Un ressort de rappel **80** assure le retour de la butée escamotable **58** dans la position active de la figure **25****,** lorsque la vis de serrage **38** retourne à la position de déverrouillage. Dans ce mode de réalisation, comme dans les précédents, la butée escamotable est logée dans une découpe de l'élément de bride **32B** présentant des rebords **76, 78** qui forment des faces d'appui pour la butée escamotable **58** dans la position active et des faces de guidage de la butée escamotable **58** entre la position active et la position escamotée.

Suivant une variante non illustrée, il est possible de guider la butée escamotable de manière à combiner un mouvement de rotation autour d'un axe de basculement et un mouvement de translation de cet axe de basculement parallèlement à l'axe de serrage **300.**

Naturellement, de nombreuses autres variantes sont possibles.

La position latéralisée de la butée escamotable **58** par rapport au plan longitudinal médian **P** permet de libérer de la place à proximité du plan longitudinal médian **P** et de l'axe d'ajustement **200** du mécanisme de colonne de direction **10,** afin d'intégrer d'autres fonctions. Il est toutefois possible de positionner la butée escamotable **58** dans le plan médian **P,** ou à tout autre endroit approprié, l'un des avantages de l'invention étant justement de permettre d'éloigner la butée escamotable **58** du mécanisme de verrouillage **34.**

Diverses autres modifications peuvent être envisagées:
- les butées de fin de course d'extension **84** et de fin de course d'ajustement **82** peuvent être réalisées par des pièces rapportées ou par des ergots formés directement sur le tube supérieur **16;**
- la butée escamotable **58** peut être équipée d'éléments d'amortissement en caoutchouc pour limiter le bruit au contact et le choc au contact avec les butées de fin de course d'ajustement **82** et de fin de course d'extension **84;**
- la butée escamotable **58** peut être dupliquée de chaque côté du plan longitudinal médian **P** afin d'augmenter la résistance aux efforts lors des ajustements de position du tube supérieur **16;**
- la came d'interverrouillage **54** peut être directement formée sur la tige de serrage **34;**
- la tôle principale du corps inférieur **3** et les éléments de bride de serrage **4** et **5** peuvent être une seule et même pièce;
- on peut supprimer le ressort de rappel **80** dans le mode de réalisation des figures **16** à **19****,** en prévoyant un coincement par frottement entre la butée escamotable et l'élément de bride;
- la butée escamotable ne coopère pas nécessairement avec la butée de fin de course d'extension. On peut prévoir sur le corps inférieur **14** une butée fixe ayant pour fonction de limiter la course d'extension en coopérant avec la butée de fin de course d'extension **84.** Dans cette hypothèse, cette butée fixe doit être positionnée de manière à ne pas interférer avec la trajectoire de la butée de fin de course d'ajustement **82.**

Par ailleurs, le mécanisme de verrouillage **34** proprement dit peut être de tout type, motorisé ou non. La vis de serrage **38** peut, ou non, avoir un mouvement de translation parallèlement à l'axe de serrage **300.** La vis de serrage **38** peut le cas échéant être située uniquement d'un côté du plan longitudinal médian **P.** Le guidage du tube supérieur **16** par rapport au corps inférieur **14** peut être de nature quelconque. Il peut définir une trajectoire de translation parallèlement à un axe fixe **200** par rapport au corps inférieur, mais non nécessairement parallèle à l'axe de rotation de l'embout d'arbre **18.** Il peut également s'agir d'une trajectoire de rotation autour d'un axe perpendiculaire à l'axe de rotation de l'embout d'arbre **18.** L'invention est également applicable en l'absence de mouvement entre le support fixe **12** et le corps inférieur **14,** ces deux composants pouvant alors n'en faire qu'un si le corps inférieur **14** est pourvu d'une interface de fixation à la superstructure du véhicule.

Suivant le type de colonne de direction, on peut avantageusement prévoir un mécanisme de dissipation d'énergie qui dissipe au moins partiellement l'énergie cinétique du corps du conducteur de façon maîtrisée et graduelle sur la course de rétractation, par exemple par déformation plastique et/ou déchirement d'une pièce telle qu'une bande métallique. On peut également prévoir dans certaines circonstances, notamment dans des utilisations du véhicule sans ceinture de sécurité, un mécanisme d'assistance à la rétractation, qui provoque ou accélère la rétractation du mécanisme de colonne de direction lors de la détection d'un choc, par exemple par charge pyrotechnique ou décharge d'un ressort.

## Revendications

1. Mécanisme de colonne de direction (10), comportant:
- un corps inférieur (14);
- un tube supérieur (16) mobile par rapport au corps inférieur (14) en profondeur suivant une trajectoire d'extension et de rétractation, dans un sens de rétraction et dans un sens d'extension opposé au sens de rétractation;
- un mécanisme de verrouillage (34) du tube supérieur (16) par rapport au corps inférieur (14), mobile entre une position de verrouillage et une position de déverrouillage, le mécanisme de verrouillage (34) comportant une tige de serrage (38) entraînée en rotation autour d'un axe de serrage (300);
- une butée escamotable (58), mobile par rapport au corps inférieur (14) et par rapport au mécanisme de verrouillage (34) entre une position active et une position escamotée, la butée escamotable (58) dans la position active limitant la course du tube supérieur (16) dans le sens de rétractation à une position de fin de course d'ajustement, la butée escamotable en position escamotée n'interférant pas avec le tube supérieur (16), la butée escamotable (58) étant reliée au mécanisme de verrouillage par l'intermédiaire d'un interverrouillage (65) de manière à être en position active lorsque le mécanisme de verrouillage (34) est en position de déverrouillage;
**caractérisé en ce que** le corps inférieur (14) comporte un ou plusieurs appuis (76, 78, 96) pour reprendre au moins partiellement des efforts générés par le tube supérieur (16) sur la butée escamotable (58) lorsque le mécanisme de verrouillage (34) est en position déverrouillée et que le tube supérieur (16) est en position de fin de course d'ajustement en appui contre la butée escamotable (58).

2. Mécanisme de colonne de direction selon la revendication 1, **caractérisé en ce que** le ou les appuis (74, 76, 78) incluent au moins un appui (76, 78) perpendiculaire à la trajectoire du tube supérieur (16) au niveau de la butée escamotable (58) en position active.

3. Mécanisme selon l'une quelconque des revendications précédentes, **caractérisé en ce que** le ou les appuis incluent une ou plusieurs surfaces d'appui (96, 98) parallèles à la trajectoire de la butée escamotable (58) entre la position active et la position escamotée.

4. Mécanisme selon l'une quelconque des revendications précédentes, **caractérisé en ce que** le corps inférieur est pourvu de moyens de guidage (74, 76, 78, 90) de la butée escamotable (58) entre la position escamotée et la position active.

5. Mécanisme de colonne de direction selon la revendication 4, **caractérisé en ce que** la butée escamotable (58) a un mouvement de translation parallèlement à un axe de translation (400, 600) fixe par rapport au corps inférieur (14).

6. Mécanisme de colonne de direction selon la revendication 4, **caractérisé en ce que** la butée escamotable (58) a un mouvement de rotation autour d'un axe de basculement (500) fixe par rapport au corps inférieur (14).

7. Mécanisme de colonne de direction selon l'une quelconque des revendications précédentes, **caractérisé en ce que** la trajectoire d'extension et de rétractation est une translation parallèlement à un axe (200) fixe par rapport au corps inférieur (14).

8. Mécanisme de colonne de direction selon l'une quelconque des revendications précédentes, caractérisé en ce l'interverrouillage (65) comporte un ressort (80) de rappel de la butée escamotable (58) vers la position active.

9. Mécanisme de colonne de direction selon l'une quelconque des revendications précédentes, **caractérisé en ce que** le corps inférieur (14) est mobile par rapport à un support fixe (12) du mécanisme de colonne de direction(10), suivant une trajectoire de basculement, le support fixe (12) étant pourvu d'une interface de fixation (20) à une superstructure de véhicule, le mécanisme de verrouillage (34) dans la position de verrouillage verrouillant le corps inférieur (14) par rapport au support fixe (12), le mécanisme de verrouillage (34) dans la position de déverrouillage libérant le corps inférieur (14).

10. Mécanisme de colonne de direction selon l'une quelconque des revendications précédentes, **caractérisé en ce que** l'interverrouillage (65) est tel que la butée escamotable (58) est en position escamotée lorsque le mécanisme de verrouillage (34) est en position de verrouillage.

11. Mécanisme de colonne de direction selon l'une quelconque des revendications 1 à 9, **caractérisé en ce que** le mécanisme de verrouillage (34) libère la butée escamotable (58) lorsqu'il passe de la position de déverrouillage à la position de verrouillage, mais n'entraîne pas la butée escamotable (58) vers la position escamotée.

12. Mécanisme de colonne de direction selon la revendication 11, **caractérisé en ce que** le tube supérieur (16) est pourvu d'un poussoir (182) coopérant avec une face réceptrice (158) de la butée escamotable (58) pour entraîner la butée escamotable (58) vers la position escamotée lorsque le mécanisme de verrouillage (34) est en position de verrouillage et qu'une force supérieure à un seuil prédéterminé est appliquée sur le tube supérieur (16) et entraîne le tube supérieur (16) dans le sens de rétractation.

13. Mécanisme de colonne de direction selon l'une quelconque des revendications précédentes, **caractérisé en ce que** l'axe de serrage (300) est fixe par rapport au corps inférieur (14).

14. Mécanisme de colonne de direction selon l'une quelconque des revendications précédentes, **caractérisé en ce que** l'interverrouillage (65) comporte un organe d'entraînement (54) solidaire en rotation de la tige de serrage (38), coopérant avec un organe récepteur (56) solidaire de la butée escamotable (58).

15. Mécanisme de colonne de direction selon la revendication 14, **caractérisé en ce que** l'organe d'entraînement (54) comporte une came solidaire de la tige de serrage (38) et l'organe récepteur (56) comporte au moins une surface réceptrice (60, 62), de préférence formée sur la butée escamotable (58).

16. Mécanisme de colonne de direction selon l'une quelconque des revendications 1 à 15, **caractérisé en ce que** la butée escamotable (58) est guidée en translation perpendiculairement à l'axe de serrage (300).

17. Mécanisme de colonne de direction selon l'une quelconque des revendications 1 à 15, **caractérisé en ce que** la butée escamotable est guidée en translation parallèlement à l'axe de serrage.

18. Mécanisme de colonne de direction selon l'une quelconque des revendications 1 à 14, **caractérisé en ce que** la butée escamotable est guidée en rotation perpendiculairement à l'axe de serrage.

## Patentansprüche

1. Lenksäulenmechanismus (10), welcher folgendes umfasst:
- einen unteren Körper (14);
- ein oberes Rohr (16), dass in Bezug auf den unteren Körper (14) in der Tiefe auf einer vergrößernden und verkleinernden Bahn in einer einfahrenden und in einer der einfahrenden Richtung entgegengesetzten ausfahrenden Richtung beweglich ist;
- einen Verriegelungsmechanismus (34) des oberen Rohrs (16) in Bezug auf den unteren Körper (14), der zwischen einer Verriegelungsposition und einer Entriegelungsposition bewegt werden kann, wobei der Verriegelungsmechanismus (34) eine Klemmstange (38) enthält, die um eine Klemmachse (300) herum drehbar angetrieben wird;
- einen einfahrbaren Anschlag (58), der in Bezug auf den unteren Körper (14) und in Bezug auf den Verriegelungsmechanismus (34) zwischen einer aktivierten Position und einer eingefahrenen Position beweglich ist, wobei der einfahrbare Anschlag (58) in der aktivierten Position den Hub des oberen Rohrs (16) in der einfahrenden Richtung auf eine angepasste Endlagenstellung begrenzt, wobei der einfahrbare Anschlag in der eingefahrenen Position nicht mit dem oberen Rohr (16) interferiert, wobei der einfahrbare Anschlag (58) über einen arretierenden Eingriff (65) so mit dem Verriegelungsmechanismus verbunden ist, dass er eine aktivierte Stellung einnimmt, wenn der Verriegelungsmechanismus (34) in der Entriegelungsposition steht;
**dadurch gekennzeichnet, dass** der untere Körper (14) ein oder mehrere Auflager (76, 78, 96) umfasst, um mindestens teilweise die vom oberen Rohr (16) auf dem einfahrbaren Anschlag (58) generierten Kräfte aufzunehmen, wenn der Verriegelungsmechanismus (34) in entriegelter Position steht und das obere Rohr (16) in der angepassten Endlagenstellung am einfahrbaren Anschlag (58) anliegt.

2. Lenksäulenmechanismus nach Anspruch 1, **dadurch gekennzeichnet, dass** das oder die Auflager (74, 76,78) mindestens ein Auflager (76,78) umfassen, das in Höhe des in aktivierter Position stehenden einfahrbaren Anschlags (58) senkrecht zur Bahn des oberen Rohrs (16) steht.

3. Mechanismus nach einem der vorhergehenden Ansprüche, **dadurch gekennzeichnet, dass** das oder die Auflager eine oder mehrere Auflageflächen (96, 98) beinhalten, die parallel zur Bahn des einfahrbaren Anschlags (58) zwischen der aktivierten Position und der ausgefahrenen Position verlaufen.

4. Mechanismus nach einem der vorhergehenden Ansprüche, **dadurch gekennzeichnet, dass** der untere Körper mit Mitteln zur Führung (74, 76, 78, 90) des einfahrbaren Anschlags (58) zwischen der aktivierten Position und der eingefahrenen Position ausgestattet ist.

5. Lenksäulenmechanismus nach Anspruch 4, **dadurch gekennzeichnet, dass** der einfahrbare Anschlag (58) eine translatorische Bewegung parallel zur Translationsachse (400, 600) macht, die in Bezug auf den unteren Körper (14) feststeht.

6. Lenksäulenmechanismus nach Anspruch 4, **dadurch gekennzeichnet, dass** der einfahrbare Anschlag (58) eine Drehbewegung um eine Schwenkachse (500) macht, die in Bezug auf den unteren Körper (14) feststeht.

7. Lenksäulenmechanismus nach einem der vorhergehenden Ansprüche, **dadurch gekennzeichnet, dass** die Bewegung auf der Vergrößerungs- und Verkleinerungsbahn eine Translation parallel zu einer in Bezug auf den unteren Körper (14) feststehenden Achse (200) ist.

8. Lenksäulenmechanismus nach einem der vorhergehenden Ansprüche, **dadurch gekennzeichnet, dass** der arretierende Eingriff (65) eine Feder (80) zum Rückstellen des einfahrbaren Anschlags (58) in die aktivierte Position umfasst.

9. Lenksäulenmechanismus nach einem der vorhergehenden Ansprüche, **dadurch gekennzeichnet, dass** der untere Körper (14) in Bezug auf einen feststehenden Träger (12) des Lenksäulenmechanismus (10) auf einen Schwenkweg beweglich ist, wobei der feststehende Träger (12) mit einer Fläche (20) zur Befestigung an einem Fahrzeugaufbau versehen ist, wobei der Verriegelungsmechanismus (34) in der Verriegelungsposition den unteren Körper (14) in Bezug auf den feststehenden Träger (12) verriegelt und der Verriegelungsmechanismus (34) in der entriegelten Position den unteren Körper (14) freisetzt.

10. Lenksäulenmechanismus nach einem der vorhergehenden Ansprüche, **dadurch gekennzeichnet, dass** der arretierende Eingriff (65) dergestalt ist, dass der einfahrbare Anschlag (58) in eingefahrener Position steht, wenn sich der Verriegelungsmechanismus (34) in verriegelter Position befindet.

11. Lenksäulenmechanismus nach einem der Ansprüche 1 bis 9, **dadurch gekennzeichnet, dass** der Verriegelungsmechanismus (34) den einfahrbaren Anschlag (58) freisetzt, wenn er von der entriegelten Position in die Verriegelungsposition wechselt, den einfahrbaren Anschlag (58) jedoch nicht in die eingefahrene Position bringt.

12. Lenksäulenmechanismus nach Anspruch 11, **dadurch gekennzeichnet, dass** das obere Rohr (16) mit einem Stößel (182) versehen ist, der mit einer Aufnahmefläche (158) des einfahrbaren Anschlags (58) zusammenwirkt, um den einfahrbaren Anschlag (58) in die eingefahrene Position zu bringen, wenn der Verriegelungsmechanismus (34) in verriegelter Position steht und eine über einem bestimmten Grenzwert liegende Kraft auf das obere Rohr (16) ausgeübt wird und das obere Rohr (16) in einfahrender Richtung antreibt.

13. Lenksäulenmechanismus nach einem der vorhergehenden Ansprüche, **dadurch gekennzeichnet, dass** die Klemmachse (300) in Bezug auf den unteren Körper (14) feststeht.

14. Lenksäulenmechanismus nach einem der vorhergehenden Ansprüche, **dadurch gekennzeichnet, dass** der arretierende Eingriff (65) ein Antriebselement (54) umfasst, das mit der Klemmstange (38) drehfest verbunden ist und mit einem Aufnahmeelement (56) zusammenwirkt, das mit dem einfahrbaren Anschlag (58) fest verbunden ist.

15. Lenksäulenmechanismus nach Anspruch 14, **dadurch gekennzeichnet, dass** das Antriebselement (54) eine Nocke umfasst, die fest mit der Klemmstange (38) verbunden ist, und das Aufnahmeelement (56) mindestens eine Aufnahmefläche (60,62) umfasst, die vorzugsweise auf dem einfahrbaren Anschlag (58) geformt ist.

16. Lenksäulenmechanismus nach einem der Ansprüche 1 bis 15, **dadurch gekennzeichnet, dass** der einfahrbare Anschlag (58) senkrecht zur Klemmachse (300) translatorisch geführt wird.

17. Lenksäulenmechanismus nach einem der Ansprüche 1 bis 15, **dadurch gekennzeichnet, dass** der einfahrbare Anschlag parallel zur Klemmachse translatorisch geführt wird.

18. Lenksäulenmechanismus nach einem der Ansprüche 1 bis 14, **dadurch gekennzeichnet, dass** der einfahrbare Anschlag senkrecht zur Klemmachse drehbar geführt wird.

## Claims

1. A steering column mechanism (10) comprising :
- a lower body (14);
- an upper tube (16) that is movable depthwise relative to the lower body (14) along an extension and retraction path, in a direction of retraction and in a direction of extension opposite the direction of retraction;
- a locking mechanism (34) for locking the upper tube (16) relative to the lower body (14), the locking mechanism (34) being movable between a locked position and an unlocked position and comprising a clamping shrank (38) rotated about a chuck spindle (300);
- a retractable stop (58) that is movable relative to the lower body (14) and relative to the locking mechanism (34) between an active position and a retracted position, with said retractable stop (58), in the active position, limiting the travel of the upper tube (16) in the direction of retraction to an adjustment stop position, with the retractable stop, in the retracted position, not interfering with the upper tube (16), with the retractable stop (58) being linked to the locking mechanism via an interlock (65) in such a way as to be in the active position when the locking mechanism (34) is in the unlocked position;
**characterized in that** the lower body (14) comprises one or more support(s) (76, 78, 96) for at least partially taking up forces generated by the upper tube (16) on the retractable stop (58) when the locking mechanism (34) is in the unlocked position and the upper tube (16) is in the adjustment stop position in abutment against the retractable stop (58).

2. A steering column mechanism according to claim 1, **characterized in that** the one or more support (s) (74, 76, 78) include(s) at least one support (76, 78) perpendicular to the path of the upper tube (16) at the active position of the retractable stop (58).

3. A mechanism according to any one of the preceding claims, **characterized in that** the support(s) include(s) one or more bearing surface(s) (96, 98) parallel to the path of the retractable stop (58) between the active position and the retracted position.

4. A mechanism according to any one of the preceding claims, **characterized in that** the lower body is provided with guide means (74, 76, 78, 90) for guiding the retractable stop (58) between the retracted position and the active position.

5. A steering column mechanism according to claim 4, **characterized in that** the retractable stop (58) moves in translation parallel to a translation axis (400, 600) stationary relative to the lower body (14).

6. A steering column mechanism according to claim 4, **characterized in that** the retractable stop (58) moves in rotation about a pivoting axis (500) stationary relative to the lower body (14).

7. A steering column mechanism according to any one of the preceding claims, **characterized in that** the extension and retraction path is a translation parallel to an axis (200) stationary relative to the lower body (14).

8. A steering column mechanism according to any one of the preceding claims, **characterized in that** the interlock (65) comprises a spring (80) for returning the retractable stop (58) to the active position.

9. A steering column mechanism according to any one of the preceding claims, **characterized in that** the lower body (14) is movable relative to a stationary support (12) of the steering column mechanism (10), along a pivoting path, with the stationary support (12) being provided with an attachment interface (20) for attaching same to a vehicle superstructure, with the locking mechanism (34), in the locked position, locking the lower body (14) relative to the stationary support (12), with the locking mechanism (34), in the unlocked position, releasing the lower body (14) .

10. A steering column mechanism according to any one of the preceding claims, **characterized in that** the interlock (65) is such that the retractable stop (58) is in the retracted position when the locking mechanism (34) is in the locked position.

11. A steering column mechanism according to any one of claims 1 to 9, **characterized in that** the locking mechanism (34) releases the retractable stop (58) when it pivots from the unlocked position to the locked position, but does not drive the retractable stop (58) to the retracted position.

12. A steering column mechanism according to claim 11, **characterized in that** the upper tube (16) is provided with a pusher (182) which cooperates with a receiving face (158) of the retractable stop (58) for driving the retractable stop (58) to the retracted position when the locking mechanism (34) is in the locked position and a force greater than a predetermined threshold is applied to the upper tube (16) and drives the upper tube (16) into the direction of retraction.

13. A steering column mechanism according to any one of the preceding claims, **characterized in that** the chuck spindle (300) is stationary relative to the lower body (14) .

14. A steering column mechanism according to any one of the preceding claims, **characterized in that** the interlock (65) comprises a drive member (54) integral, in rotation, with the clamping shank (38) which cooperates with a receiving member (56) integral with the retractable stop (58).

15. A steering column mechanism according to claim 14, **characterized in that** the drive member (54) includes a cam integral with the clamping shank (38) and the receiving member (56) has at least one receiving surface (60, 62), preferably formed on the retractable stop (58).

16. A steering column mechanism according to any one of claims 1 to 15, **characterized in that** the retractable stop (58) is guided in translation perpendicularly to the chuck spindle (300).

17. A steering column mechanism according to any one of claims 1 to 15, **characterized in that** the retractable stop is guided in translation parallel to the chuck spindle.

18. A steering column mechanism according to any one of claims 1 to 14, **characterized in that** the retractable stop is guided in rotation perpendicularly to the chuck spindle.
